Europäisches Patentamt

European Patent Office

Office européen des brevets

(11) Publication number: **0 397 260**
**A1**

# EUROPEAN PATENT APPLICATION

(21) Application number: **90201151.9**

(51) Int. Cl.5: **G09G 3/36**

(22) Date of filing: **07.05.90**

(30) Priority: **11.05.89 NL 8901184**

(43) Date of publication of application:
**14.11.90 Bulletin 90/46**

(84) Designated Contracting States:
**DE FR GB IT NL**

(71) Applicant: **N.V. Philips' Gloeilampenfabrieken**
**Groenewoudseweg 1**
**NL-5621 BA Eindhoven(NL)**

(72) Inventor: **Verheggen, Paulus Hendricus Maria**
**c/o INT. OCTROOIBUREAU B.V., Prof.**
**Holstlaan 6**
**NL-5656 AA Eindhoven(NL)**
Inventor: **Verkoeijen, Henricus Elisabeth**
**Gerardus**
**c/o INT. OCTROOIBUREAU B.V., Prof.**
**Holstlaan 6**
**NL-5656 AA Eindhoven(NL)**
Inventor: **Welzen, Theodorus Leonardus**
**c/o INT. OCTROOIBUREAU B.V., Prof.**
**Holstlaan 6**
**NL-5656 AA Eindhoven(NL)**

(74) Representative: **Raap, Adriaan Yde**
**INTERNATIONAAL OCTROOIBUREAU B.V.**
**Prof. Holstlaan 6**
**NL-5656 AA Eindhoven(NL)**

(54) **Passive display device.**

(57) Frequency-dependent voltage losses across a pixel are reduced by using sinusoidal data signals and selection signals. A difference in brightness between columns due to a difference in picture contents (ghost effect) is thereby prevented.

## Passive display device.

The invention relates to a display device having two spaced-apart supporting plates with surfaces facing each other between which a layer of liquid crystal material is present and in which a pattern of N row electrodes is arranged on the one surface and a pattern of column electrodes is arranged on the other surface, which row electrodes cross the column electrodes and the crossings constitute a matrix of display cells which can be switched from a first state to a second state, which is optically different therefrom, by means of a line scanning circuit which periodically scans the row electrodes with a line selection pulse having a length of $t_1$ and a column selection circuit which applies data voltages to the column electrodes when a row electrode is being scanned, such that the optical state realised in a display cell is determined by the value of the RMS voltage across the relevant cell.

Such display devices are used inter alia in data graphic apparatuses (monitors, word processors) and LC television.

For the so-called RMS drive Alt and Pleshko, in IEEE Trans. El. Dev. Vol. ED 21, 1974, pages 146-153, have derived relations for given values of $\hat{V}$on, $\hat{V}$off ($\hat{V}$on: RMS-value at which a pixel is considered to be "on";$\hat{V}$off: RMS-value at which a pixel is considered to be "off"), which relations indicate for the ratio S = $\hat{V}$on/$\hat{V}$off (also referred to as threshold slope in the transmission/voltage characteristic) the maximum number of rows $N_{max}$ which can be driven by means of this method while maintaining a predetermined contrast and the way in which the voltage $V_s$ of a square-wave line selection pulse and square-wave data voltages having a value of $\pm V_d$ must be chosen to realize this. These relations are:

$$N_{max} = \left[\frac{s^2+1}{s^2-1}\right]^2 \qquad (1)$$

$$V_s/V_d = \sqrt{N_{max}} \qquad (2)$$

Dependent on resistive and capacitive influences, the actual RMS voltage value across a pixel for an "on" pixel in a column in which all pixels are in the "on" state may differ from that in which the pixels in a column are alternately "on" and "off". This gives rise to a difference in brightness between the columns (so-called "ghost effect").

One of the objects of the invention is to mitigate this ghost effect as much as possible.

To this end a device according to the invention is characterized in that the line scanning circuit provides the row electrodes or the column selection circuit provides the column electrodes with a substantially sinusoidal signal of the form $\pm V \sin \frac{\pi t}{t_1}$ in which V is dependent on the type of signals presented and in which $0 < t \le t_1$.

The invention is based on the recognition that voltage losses can be considerably reduced when using sinusoidal drive signals, as compared with the use of square-wave signals.

When using sinusoidal signals the maximum drive voltages must be chosen to be a factor of $\sqrt{2}$ higher than when using square-wave drive voltages. Notably the selection voltages may require such high values that there are no suitable ICs available for this. However, it appears that the above-mentioned reduction of the ghost effect also occurs when using sinusoidal data voltages only.

Embodiments of the invention will now be described in greater detail by way of example with reference to the accompanying drawings in which

Fig. 1 shows diagrammatically a part of a matrix-oriented display device,

Fig. 2 shows diagrammatically an equivalent circuit diagram of a pixel,

Fig. 3 shows a detail of the device of Fig. 1,

Fig. 4 shows the associated data signals,

Fig. 5 shows the associated voltages across several pixels. while

Fig. 6 shows drive signals and voltages as occur in a device according to the invention and

Fig. 7 shows a modification of the drive mode shown in Fig. 5.

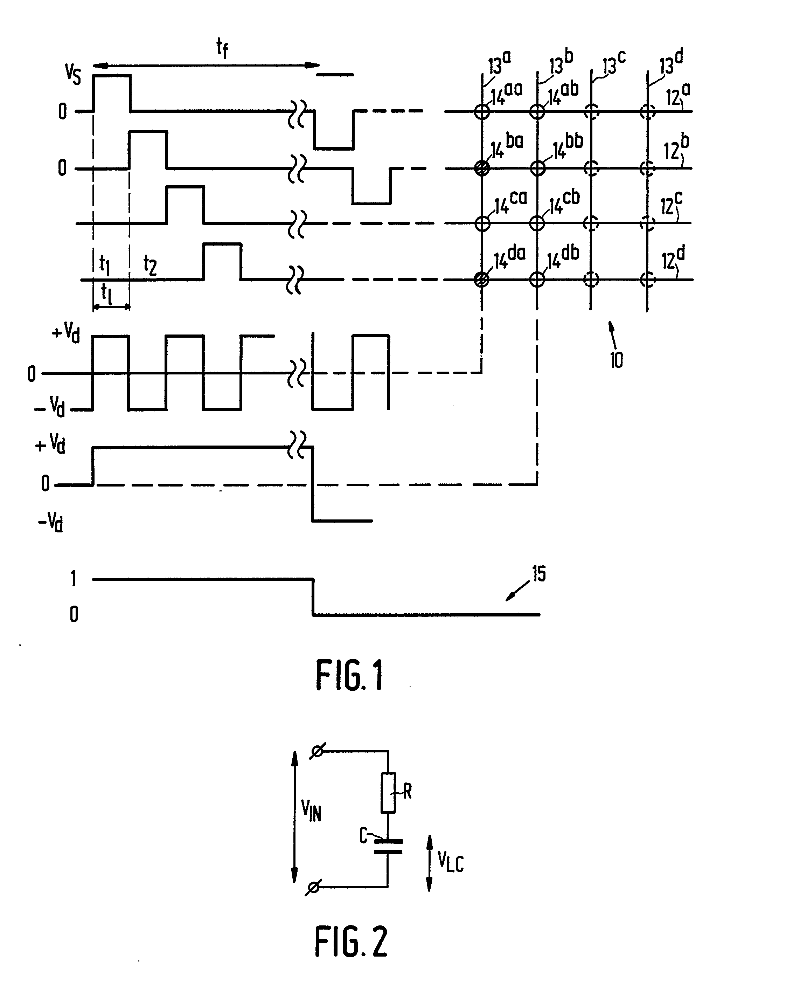

Fig. 1 shows diagrammatically a part of a matrix-oriented display device 10 which is driven by a number of n selection lines (row electrodes) 12 while the information to be displayed is presented on the data lines (column electrodes) 13. Pixels 14 are present at the location of the crossings of the selection lines 12 and the data lines 13. Dependent on the information presented on the data lines 13, the pixels 14 are in an on or an off state.

The information is presented, for example, in a pulsatory way; synchronously with the selection of the lines or row electrodes by means of a line selection voltage $V_s$ the picture information (data voltage $\pm V_d$) is applied via the column electrodes. From the instant $t_1$ the line $12^a$ is selected during a period $t_1$ (line time), which line together with the information ($\pm V_d$) which is then present on the data lines $13^a$, $13^b$ and $13^c$ determines the state of the pixels $14^{aa}$, $14^{ab}$ and $14^{ac}$. From the instant $t_2$ the line $12^b$ is selected during a period $t_1$. The information ($\pm V_d$) then present on the data lines 13 determines the state of the pixels $14^{ba}$, $14^{bb}$ and $14^{bc}$, etc. During the other part of a frame time $t_f = n.t_1$ a voltage $\pm V_d$ is present across the pixels 14, which voltage must be smaller than the threshold voltage of the optical effect.

To prevent DC components across the liquid crystal pixels, the selection and data voltages change sign. In this example this is effected once per frame time, as is indicated by the signal 15 (M signal).

In practice the rise time as well as the decay time of the optical effect is often much larger than the frame time. This means that the pixels reacts to the cumulative effect of a plurality of drive pulses. In this respect notably an LCD pixel reacts in the same way as when it is driven by means of a square-wave signal having the same RMS-value as that of the on and off voltages $\hat{V}on$ and $\hat{V}off$, given by:

$$\hat{V}_{on} = \left[ \frac{(V_s + V_d)^2}{N} + \left(\frac{N-1}{N}\right)Vd^2 \right]^{1/2}$$

$$\hat{V}_{off} = \left[ \frac{(V_s - V_d)^2}{N} + \left(\frac{N-1}{N}\right)V_d{}^2 \right]^{1/2}$$

As described in the opening paragraph, the maximum number of selection rows $N_{max}$ is related to the value of $\hat{V}on/\hat{V}off$, also referred to as the threshold slope of the optical effect.

The derivation for the on and off voltages $\hat{V}on$ and $\hat{V}off$ is based on an ideal situation. In practice voltage losses occur which can be understood by means of the equivalent circuit diagram of Fig. 2 in which C represents the capacitance of a pixel and R represents the substitution resistance of the display device. With an increasing frequency the ratio $V_{LC}/V_{in}$ will deviate more and more from 1.

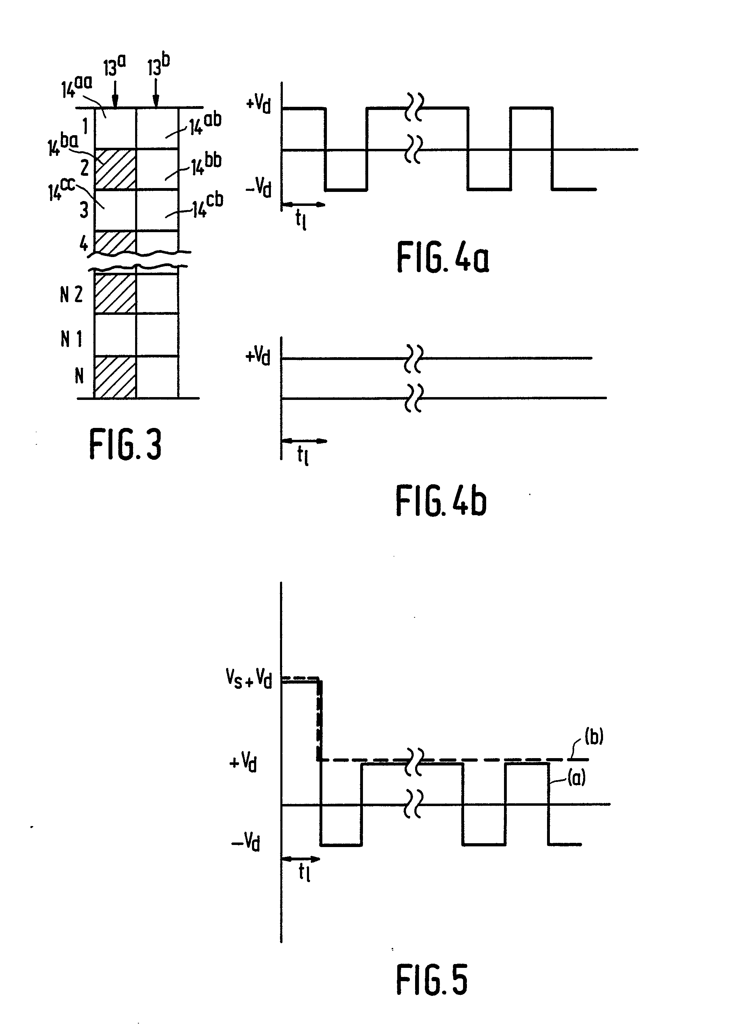

Figs. 3 to 5 show two extremes for the display device of Fig. 1 as regards the information contents of the columns $13^a$ and $13^b$. In column $13^a$ the pixels $14^{aa}$, $14^{ba}$, $14^{ca}$ etc. are alternately on and off, while in column 13b all pixels $14^{ab}$, $14^{bb}$, $14^{cb}$ are on (comparable with the situation of Fig. 1). Figs. $4^a$ and $4^b$ show the associated variation of the data signals as are presented to the columns $13^a$ and $13^b$, while Fig. 5 shows the associated voltages across the pixels $14^{aa}$ (Fig. 5a) and $14^{ab}$ (Fig. 5b).

It is apparent from the Figures that, dependent on the picture contents, signals occur with a different frequency content.

According to the invention the display device diagrammatically shown in Fig. 1 comprises a line scanning circuit and a column selection circuit which provides the row electrodes 12 and the column electrodes 13 with sinusoidal signals $V_s \sin \frac{\pi t}{t_1}$ (Fig. $6^c$) and $\pm V_d \sin \frac{\pi t}{t_1}$ (Figs. $6^a$, $6^b$) instead of the square-wave signals of Fig. 1. In the case of multiplex drive the use of sinusoidal drive signals leads to a considerably smaller voltage loss across the capacitance of the liquid crystal pixel, due, to the absence of higher harmonics. The resultant voltage across the pixels is shown in Figs. $6^a$, $6^b$, while periodical inversion of the signals is obtained by means of the M signal 15 (Fig. $6^d$). For the voltage $\hat{V}on$ it now holds (ideally) that:

$$\dot{V}_{on}{}^2 = \frac{1}{T} \left[ \int_0^{t_1} (V_s{}'+V_d{}')^2 \sin^2 \frac{\pi t}{t_1} \, dt + \right.$$

$$\left. (N-1) \int_0^{t_1} (V_d{}')^2 \sin^2 \frac{\pi t}{t_1} \, dt \right]$$

$$= \frac{1}{T} \left[ (V_s{}'+V_d{}')^2 \cdot \frac{t_1}{\pi} \cdot \sin^2 \frac{n t_1}{t_1} \, d\left(\frac{\pi t_1}{t_1}\right) + \right.$$

$$\left. \frac{t_1}{\pi} (N-1) \int_0^{t_1} (V_d{}')^2 \sin^2 \frac{\pi t}{t_1} \, d\left(\frac{\pi t_1}{t_1}\right) \right]$$

or (with $\int \sin^2 dx = 1/2x - 1/4 \sin 2x$):

$$\dot{V}_{on}{}^2 = \frac{t_1}{T} \left[ (V_s{}'+V_d{}')^2 \cdot \frac{1}{2} \cdot + (N-1)(V_d{}')^2 \cdot \frac{1}{2} \right] =$$

$$\frac{2t_1}{T} \left[ (V_s{}'+V_d{}')^2 + (N-1)(V_d{}')^2 \right]$$

Similarly, we find:

$$\dot{V}_{off}{}^2 = \frac{2t_1}{T} \left[ (V_s{}'-V_d{}')^2 + (N-1)(V_d{}')^2 \right]$$

or:

$$\frac{\dot{V}_{on}{}^2}{\dot{V}_{off}{}^2} = \frac{(V_s{}'+V_d{}')^2 + (N-1)(V_d{}')^2}{(V_s{}'-V_d{}')^2 + (N-1)(V_d{}')^2}$$

Optimization leads to similar relations as in the opening paragraph for square-wave voltages, namely:

$$N_{max} = \left[ \frac{S_2+1}{S_2-1} \right]^2$$

$$\frac{V_s{}'}{V_d{}'} = \sqrt{N_{max}}$$

Since all signals are sinusoidal, a considerable reduction in the voltage drop across a pixel is obtained so that the said ghost effect is largely eliminated. Moreover, the use of sinusoidal signals has advantages because the voltage loss across the row electrodes will be smaller.

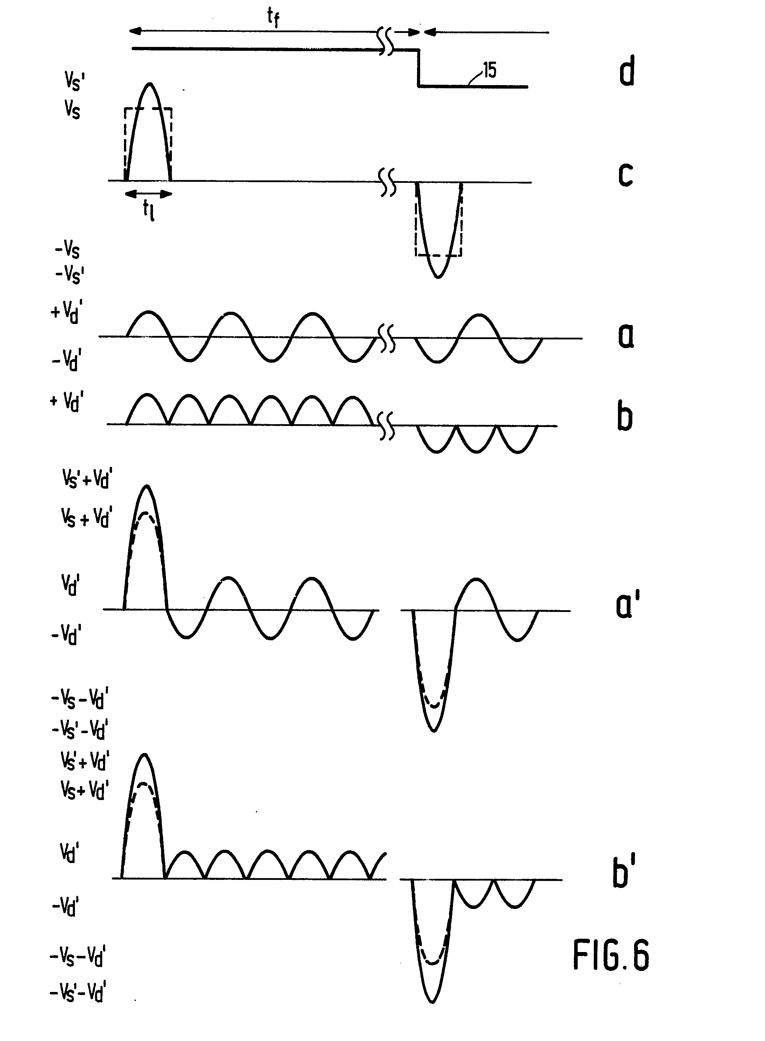

To reduce the maximum required selection voltages, it is also possible to use a "hybrid" drive mode which also results in a considerable reduction of the ghost effect when choosing a square-wave selection signal (denoted by broken lines in Fig. 6$^c$ the voltage across the pixels 14 is also denoted by broken lines in Figs. 6$^a$ and 6$^b$) and sinusoidal data signals.

Now it holds that

$$
V_{on}^2 = \frac{1}{T} \left[ \int_0^{t_1} (V_s + V_d{}' \sin \frac{\pi t}{t_1})^2 \, dt + (N-1) \int_0^{t_1} (V_d{}')^2 \sin^2 \frac{\pi t}{t_1} \, dt \right]
$$

$$
= \frac{1}{T} \left[ (V_s)^2 . t_1 + N.(V_d{}')^2 \int_0^{t_1} \sin^2 \frac{\pi t}{t_1} . \, dt + 2V_s.V_d{}' \int_0^{t_1} \sin \frac{\pi t}{t_1} \, dt \right]
$$

$$
= \frac{1}{T} \left[ (V_s)^2 . t_1 + N.(V_d{}')^2 . \frac{t_1}{\pi} \int_0^{t_1} \sin^2 \frac{\pi t}{t_1} \, d(\frac{\pi t}{t_1}) + 2V_s.V_d{}' . \frac{t_1}{\pi} \int_0^{t1} \sin \frac{\pi t}{t1} \, d(\frac{t1}{\pi t1}) \right]
$$

$$
= \frac{t_1}{T} \left[ (V_s)^2 + \frac{N(V_d{}')^2}{\pi} (\frac{1}{2} \pi t/t_1 - \frac{1}{4} \sin^2 \frac{\pi t}{t_1}) \Big|_0^{t_1} + \frac{2}{\pi} V_s.V_d{}' . -\cos \frac{\pi t}{t_1} \Big|_0^{t1} \right]
$$

$$
= \frac{t_1}{T} \left[ (V_s)^2 + \frac{N.(V_d{}')^2}{2} + \frac{4V_s.V_d{}'}{\pi} \right]
$$

Similarly, it holds that:

$$\hat{v}_{off}^2 = \frac{t_1}{T}\left[(V_s)^2 + \frac{N.(V_d')^2}{2} - \frac{4.V_s.V_d'}{\pi}\right]$$

so that:

$$\frac{\hat{v}_{on}^2}{\hat{v}_{off}^2} = \frac{(V_s)^2 + \dfrac{N.(V_d')^2}{2} - \dfrac{4.V_s.V_d'}{\pi}}{(V_s)^2 + \dfrac{N(V_d')^2}{2} - \dfrac{4V_s.V_d'}{\pi}} =$$

$$\frac{\alpha^2 + 1/2N + 4/\pi\ \alpha}{\alpha^2 + 1/2N - 4/\pi\ \alpha} \cdot \quad (\alpha = \frac{V_s}{V_d'})$$

This expression is optimal if

$$\frac{d}{d\alpha}\left(\frac{\alpha^2 + 1/2\ N + 4/\pi\ \alpha}{\alpha^2 + 1/2\ N - 4/\pi\ \alpha}\right) = 0$$

or:

$\alpha = \sqrt{1/2\ N}$ so that $V_s = \sqrt{N}V_d'/2$

A comparison with the square-wave drive mode according to Alt and Pleshko yields:

| | Alt + Pleshko | Hybrid drive mode |
|---|---|---|
| $\dfrac{\hat{v}_{on}^2}{\hat{v}_{off}^2} = S_2 = $ | $\dfrac{\sqrt{N} + 1}{\sqrt{N} - 1}$ | $\dfrac{\sqrt{N} + 2\sqrt{2/\pi}}{\sqrt{N} - 2\sqrt{2/\pi}}$ |
| N = 100 | $s^2 = 1.1055$ | $s^2 = 1.096$ (A&P: 120) |
| N = 200 | $s^2 = 1.0734$ | $s^2 = 1.0658$ (A&P: 247) |
| N = 240 | $s^2 = 1.0668$ | $s^2 = 1.0599$ (A&P: 286) |

The last column also states which multiplex factor in the case of a square-wave drive mode (in the ideal case) according to Alt and Pleshko could be reached at the same slope $S = V_{on}/\hat{v}_{off}$.

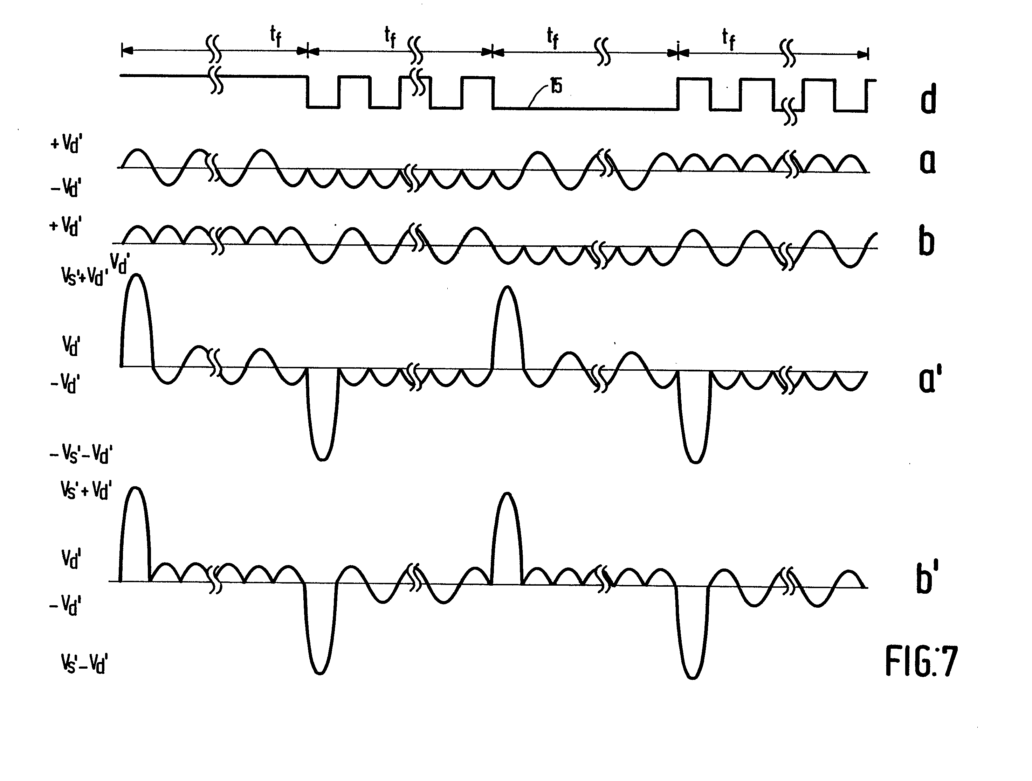

Fig. 7 shows a modification in which the M signal 15 is alternately constant and subsequently changes sign each line time during a frame time $t_f = Nt_1$ (Fig. 7$^d$). With the same data signals presented as in the previous examples, these are presented by the choice of such a signal 15 to the column electrodes 13, as in shown in Figs. 7$^a$ and 7$^b$, which leads to the variation of the voltage across the pixels 14 as shown in Figs. 7$^a$ and 7$^b$, respectively. The effective voltages across the pixels in 14$^{aa}$ and 14$^{ab}$ now vary identically in spite of the completely different picture content of the columns 13$^a$ and 13$^b$, but they vary with an opposite sign and are shifted over one frame period. A substantially identical drive without any ghost effect for two extreme situations is then obtained. The advantages obtained of course also apply to other forms of the picture content.

The invention is of course not limited to the examples shown, but many variations within the scope of the invention can be conceived by those skilled in the art. For example, for obtaining grey scales, the sinusoidal data signal may change sign during the line selection period. The said advantages (less voltage loss due to the capacitive behaviour of the pixel) as compared with square-wave signals also occur in this case.

## Claims

1. A display device having two spaced-apart supporting plates with surfaces facing each other between which a layer of liquid crystal material is present and in which a pattern of N row electrodes is arranged on the one surface and a pattern of column electrodes is arranged on the other surface, which row electrodes cross the column electrodes and the crossings constitute a matrix of display cells which can be switched from a first state to a second state, which is optically different therefrom, by means of a line scanning circuit which periodically scans the row electrodes with a line selection pulse having a length $t_1$ and a column selection circuit which applies data voltages to the column electrodes when a row electrode is being scanned, such that the optical state realized in a display cell is determined by the value of the RMS voltage across the relevant cell, characterized in that the line scanning circuit provides the row electrodes or the column selection circuit provides the column electrodes with a substantially sinusoidal signal of the form $\pm V \sin \pi t/t_1$ in which V is dependent on the type of signals presented and in which $0 < t \leq t_1$.

2. A display device as claimed in Claim 1, characterized in that the line scanning circuit and the column selection circuit supply the sinusoidal signals.

3. A display device as claimed in Claim 1 or 2, characterized in that the signal presented to the column electrodes changes sign during the line selection pulse.

4. A display device as claimed in Claim 1, 2 or 3, characterized in that the device supplies an alternating signal which determines the sign of the line selection pulse and the data voltages, said alternating signal consisting of a continuous signal having a length of $Nt_1$ followed by a square-wave signal having a period $2t_1$ and changing sign after each period $m Nt_1$ (m even).

FIG.1

FIG.2

FIG. 3

FIG. 4a

FIG. 4b

FIG. 5

FIG.6

FIG:7

EP 0 397 260 A1

4-Ⅳ-PHN 12916

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | IBM TECHNICAL DISCLOSURE BULLETIN, vol. 16, no. 5, October 1973, pages 1456-1457, New York, US; P.M. ALT: "Multiplexing for large matrix, dynamic scattering, liquid crystal cells" * Pages 1456-1457 * | 1,2 | G 09 G 3/36 |
| A | IBM TECHNICAL DISCLOSURE BULLETIN, vol. 22, no. 6, November 1979, pages 2507-2508, New York, US; J. ADDY et al.: "Addressing a liquid crystal" * Pages 2507-2508 * | 1 | |

TECHNICAL FIELDS
SEARCHED (Int. Cl.5)

G 09 G 3/36

The present search report has been drawn up for all claims

| Place of search | Date of completion of the search | Examiner |
|---|---|---|
| THE HAGUE | 16-07-1990 | VAN ROOST L.L.A. |

EPO FORM 1503 03.82 (P0401)